# EUROPEAN PATENT APPLICATION

(11) **EP 2 809 032 A1**
(43) Date of publication of application: **03.12.2014**
(21) Application number: 14170511.1
(22) Date of filing: 29.05.2014
(51) Int. Cl.: H04L 12/24, H04L 12/26

(54) **Integrating data from various network nodes using a template stack**

(30) Priority: 31.05.2013 US 201361829587 P; 12.07.2013 US 201313940869
(71) Applicant: Fluke Corporation, Everett, WA 98203 (US)
(72) Inventor: Monk, John, Everett, WA 98206-9090 (US); Laver, Bryan K, Everett, WA 68206-9090 (US)
(74) Representative: Hargreaves, Timothy Edward

(57) **Abstract**

There is provided a template stack that receives data from a plurality of nodes in a communication network. The template stack comprises templates, maps the received data to a common data framework and receives a template request from a client node. Each template has a name and describes how to generate a response using the transforms and drivers for receiving data from the plurality of nodes in a communication network. The template request preferably includes at least one transform function, such as merge or a union and a reference to data sources. In response to receiving the template request, the template stack performs the at least one transform function on the data to yield transform data and transmits the transform data to the client node. The template stack may be used to find problems in distributed applications.

## Description

### CROSS-REFERENCE TO RELATED APPLICATIONS

This Application claims the benefit of U.S. Provisional Application 61/829,587 filed on May 31, 2013, the entire contents of which is incorporated herein by reference.

### BACKGROUND

### 1. Field of the Invention

The present disclosure relates to communication networks, and more particularly, to integrating various types of data into a common framework.

### 2. Description of the Related Art

Diagnosing operational problems for distributed applications amongst various nodes in a communication network proves difficult at best. For example, diagnosing operational problems can include accessing a wide variety of performance data, status data for each node, and application specific metrics. Further, data from each individual node, such as a data source, typically only provides a local view of potential operational problems. Despite efforts to date, conventional techniques that attempt to provide a system wide diagnosis of a network problem prove inadequate due to the inherent diversity of the local data from the various nodes.

### SUMMARY

The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings.

According to one embodiment of the invention, a template stack maps data from a variety of data sources or nodes into a common frame work. The template stack particularly includes templates, transforms and drivers.

Operationally, a node, such as a template stack node, receives data from a plurality of nodes (e.g., data sources) in a communication network, and maps (e.g., via drivers) the data from each node to a common data framework. The template stack node receives an template request (e.g., an executable file) from a client node and performs, in response to the template request, at least one transform function specified by the template request on the data of the plurality of nodes to yield transformed data. The template stack returns or transmits the transformed data to the client node. In some embodiments, the transform function includes, but is not limited to functions such as a merge, a union, an addprovisionedinterfaces, and a derived columns. Preferably, when the template stack node performs the function specified by the template request, the template stack further catches and handles exceptions and errors.

In certain other embodiments, the template request is stackable and can call other or additional transform functions (e.g., of an additional template request). In such embodiments, the template stack node also performs the additional transform functions.

These and other features of the systems and methods of the subject invention will become more readily apparent to those skilled in the art from the following detailed description of the preferred embodiments taken in conjunction with the drawings.

Features of one aspect may be combined with other features of the same or other aspects in any appropriate combination. Features of any one claim may be combined with features of any one or more other claims, as appropriate, regardless of the dependency of those claims.

### BRIEF DESCRIPTION OF THE DRAWINGS

So that those skilled in the art to which the subject invention appertains will readily understand how to make and use the devices and methods of the subject invention without undue experimentation, preferred embodiments thereof will be described in detail herein below with reference to certain figures, wherein:
FIG. 1 is a schematic block diagram of an example communication network;
FIG. 2 is a schematic block diagram of an example network device;
FIG. 3 is a schematic diagram of a template stack architecture;
FIGS. 4A and 4B are two exemplary templates; and
FIG. 5 illustrates an example simplified procedure for integrating data from various nodes into a common framework.

A component or a feature that is common to more than one drawing is indicated with the same reference number in each of the drawings.

### DESCRIPTION OF EXAMPLE EMBODIMENTS

### Overview

According to one or more embodiments of the disclosure, a template stack node, receives data from a plurality of nodes in a communication network. The template stack node (or additional node(s)) maps the received data to a common data framework and receives a template request (e.g., an executable file, a reference to a stored template, etc.) from a client node. The template request preferably includes at least one transform function. In response to receiving the template request, the node (or additional node(s)) performs the at least one transform function on the data of the plurality of nodes to yield transform data. The template stack can be used to determine one or more operational problems of a distributed application based on the transformed data. In some embodiments, the template stack, in conjunction with an alert engine can identify operational problems based on the transformed data, generate alerts, and transmit the transformed data as well as the alerts to the client node.

### Description

A communication network is a geographically distributed collection of nodes interconnected by communication links and segments for transporting data between end nodes, such as personal computers and workstations, or other devices, such as sensors, etc. Many types of networks are available, with the types ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), synchronous digital hierarchy (SDH) links, or Powerline Communications (PLC) such as IEEE 61334, CPL G3, Watt Pulse Communication (WPC), and others.

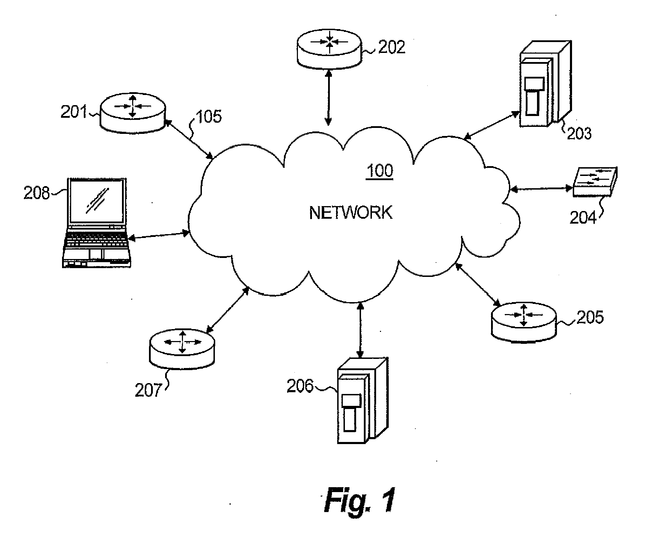

FIG. 1 is a schematic block diagram of an example communication network 100 illustratively comprising nodes/devices 201-208 (e.g., network devices such as client devices, servers, routers, switches, and the like) interconnected by various methods of communication. For instance, the links 105 may be wired links or may comprise a wireless communication medium, where certain nodes are in communication with other nodes, e.g., based on distance, signal strength, current operational status, location, etc. Those skilled in the art will understand that any number of nodes, devices, links, etc. may be used in the computer network, and that the view shown herein is for simplicity. Also, while the embodiments are shown herein with reference to a general network cloud, the description herein is not so limited, and may be applied to networks that are hardwired.

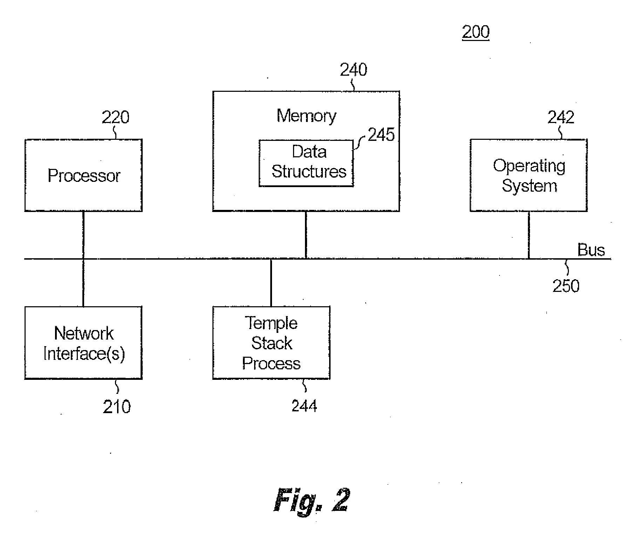

FIG. 2 is a schematic block diagram of an example network device 200 (e.g., one of network devices 201-208) that may be used with one or more embodiments described herein, e.g., as one of the nodes shown in the network 100. Device 200 may comprise one or more network interfaces 210, at least one processor 220, and a memory 240 interconnected by a system bus 250.

The network interface(s) 210 contain the mechanical, electrical, and signaling circuitry for communicating data over physical and/or wireless links coupled to the network 100. The network interfaces may be configured to transmit and/or receive data using a variety of different communication protocols, including, *inter alia,* TCP/IP, UDP, wireless protocols (e.g., IEEE Std. 802.15.4, WiFi, Bluetooth®,), Ethernet, etc.

The memory 240 comprises a plurality of storage locations that are addressable by the processor 220 and the network interfaces 210 for storing software programs and data structures associated with the embodiments described herein. As noted above, certain devices may have limited memory or no memory (e.g., no memory for storage other than for programs/processes operating on the device). The processor 220 may comprise necessary elements or logic adapted to execute the software programs and manipulate data structures 245, such as routes or prefixes (notably on capable devices only). An operating system 242, portions of which are typically resident in memory 240 and executed by the processor, functionally organizes the device by, *inter alia,* invoking operations in support of software processes and/or services executing on the device. These software processes and/or services may comprise a template stack process/services 244. It will be apparent to those skilled in the art that other processor and memory types, including various computer-readable media, may be used to store and execute program instructions pertaining to the techniques described herein. Also, while the description illustrates various processes, it is expressly contemplated that various processes may be embodied as modules configured to operate in accordance with the techniques herein (e.g., according to the functionality of a similar process).

Illustratively, the techniques described herein may be performed by hardware, software, and/or firmware, such as in accordance with the template stack process 244, which may contain computer executable instructions executed by the processor 220 (or an independent processor of interfaces 210) to perform functions relating to the techniques described herein.

As noted above, diagnosing operational problems for distributed applications amongst various nodes in a communication network proves difficult at best especially when attempting to correlate local and diverse status data to broader system level operations.

Accordingly, the techniques described herein provide a template stack that synthesizes local and diverse data into an integrated and common template stack platform. As described herein, these techniques provide for analysis and correlation of data from corresponding data sources (e.g., network nodes) based on time, location, type of device, interfaces, applications, protocols, class of services, application host, and the like. In particular, in one or more specific embodiments, the template stack techniques illustratively provide a common framework to interfaces and map various types of data to a common architecture for additional processing. Once mapped, the techniques provide transforms or functions (e.g., defined according to various templates) that are performed on part, or all, of the mapped data without requiring hard-coded support or new software builds.

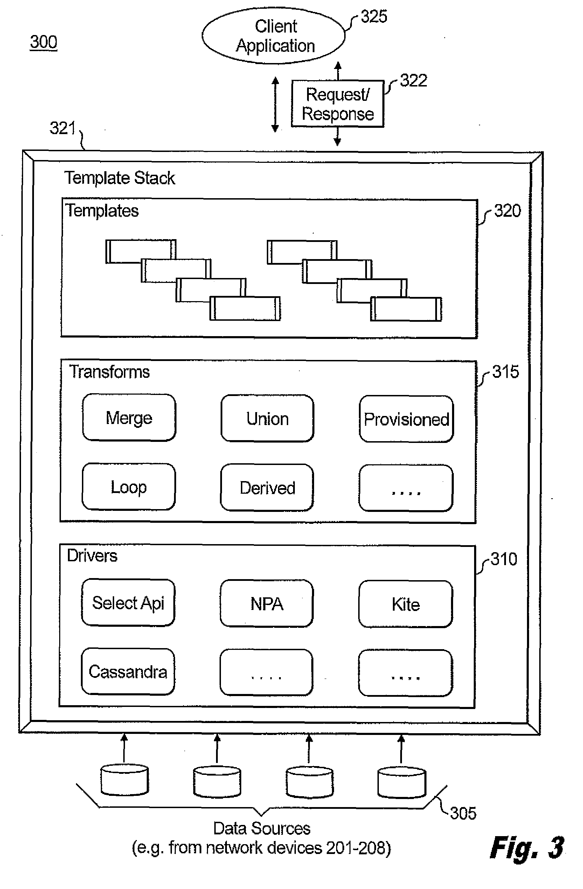

Illustratively, referring to FIG. 3, the template stack techniques described herein are shown in an architecture diagram 300. As discussed above, the template stack architecture 300 provides a common and consistent data model generally referenced as template stack 321 for handling a wide variety of data from data sources 305. In general, template stack 321 includes drivers 310, transforms 315, and templates 320.

With respect to drivers 310, drivers 310 provide data-source specific formatting and resolve syntax issues from a wide variety of data sources 305. In this fashion, template stack architecture uses drivers 310 to directly access or interface with external data sources 305 (e.g., from network devices 201-208). Further, drivers 310 are configured to receive requests for data (the requests preferably being defined in terms of the template stack model), translate the requests into a format and syntax required by a data source, retrieve the requested data from the data source, convert the retrieved data to be consistent with the common template stack data model and catch and handle exceptions and errors, and isolate the exceptions and errors from the rest of the template stack architecture.

Transforms 315 provide instructions or functional operations to be performed on data retrieved by drivers 315. Illustratively, some transforms include merge, union, addprovisionedinterfaces, derivedcolumns, etc. The merge function or transform particularly merges multiple data tables into a single data table based on primary respective primary keys. In this fashion, the merge transform stitches data tables together to create a single or common wider data table. The union transform unions multiple data tables into a single data table based on respective rows. Notably, a schema of each data table is preferably the same. The addprovisionedinterfaces transform adds new rows into an existing data table and the derivedcolumns transform adds new columns into the existing data table. Generally, transforms 315 accept input from the one or more data sources via drivers 310 and returns a single data set. Preferably, transforms 315 catch and handle exceptions and errors and isolates the exceptions and errors from other components of the template stack architecture 300.

Templates 320 of the template stack 321 define data that can be retrieved using the template stack architecture. Notably, the templates 320 typically include pre-defined functions or definitions and are stored in memory (e.g., data structures 245) and are referenced by template requests, as discussed herein. For example, illustratively, each template has a name and describes how to generate a response using the transforms 315 and drivers 310. Operatively, each template typically specifies one or more transform (e.g., "merge") and one or more data sources (e.g., "NPA" and "Kite"). Notably, from the template perspective, data sources can include one of drivers 310 (which returns data from data sources 305) or even another "child" template.

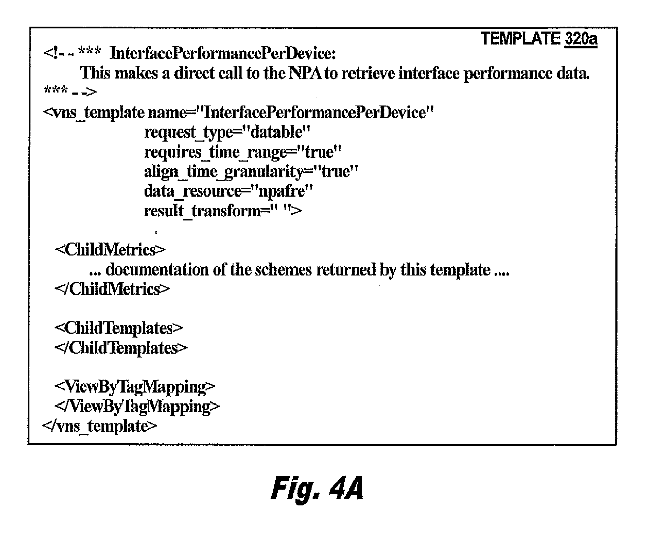

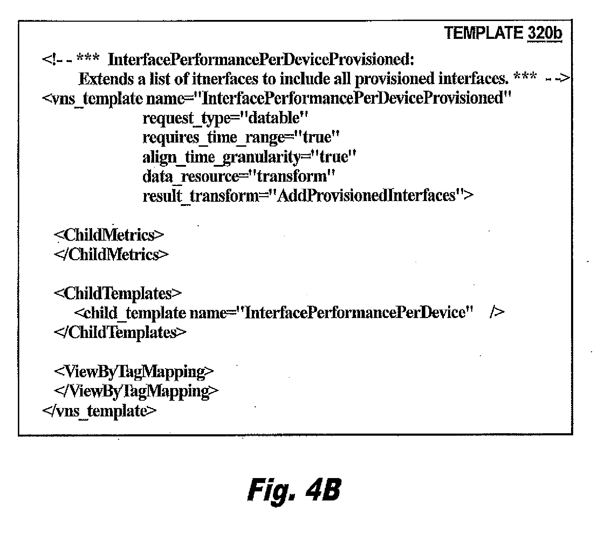

Generally, templates 320 are defined as meta-data instead of code. For example, FIGS. 4A and 4B provide two exemplary templates-namely, template 320a and 320b, respectively. Template 320a is entitled "InterfacePerformancePerDevice" and accesses data from one of drivers 310 (i.e., NPA) using a Fre interface. As shown, template 320a does not include any child templates since it makes a direct call to an NPA and further, it does not include any reference to transform 315. Template 320b is entitled "InterfacePerformancePerDeviceProvisioned" and retrieves certain data from data sources 305 (e.g., via drivers 310) and applies an "AddProvisionedInterfaces" transform to all returned data.

Referring again to FIG. 3, a client application 325 sends and receives responses/requests 322 to template stack 321. Generally, requests conform to a common application interface (API). An example of a request is as follows:
DataSet outputData = GetDataSet(MetaDataTemplate requestTemplate,
List<NameValuePair> parameters, DataSet inputData)

According to the example request, "requestTemplate" calls one of templates 320; "parameters" represents a collection of parameters for the request; "inputData" is an empty data set containing a data table for each input data source; and "outputData" is a data set containing a table with a shared or common name as the "requestTemplate". Such a table contains or explicitly references data provided in the response. Further, the schema of such table is complete and does not depend on whether or not any exceptions or problems were identified in responding to the request. Notably, according to the API, the "outputData" can also include a data table named "ErrorMessages" to handle any errors/exceptions (e.g., the table can include a row that documents any expcetion or problem identified in responding to the request). Further, the "outputData" preferably includes a data table including the same.

Illustratively, the techniques described herein may be performed by hardware, software, and/or firmware, such as in accordance with the template stack process 244, which may each comprise computer executable instructions executed by processor 220 to perform functions relating to the techniques described herein.

Operationally, under the illustrative control of template stack process 244, the template stack 321 receives a request 322 from a client application 325. The request 322 specifies particular template and provides a collection of parameters (e.g., specified as a name/value pair). Importantly, parameter passing via requests avoids unnecessary conversion, re-formatting, editing and filtering of parameters. Further, the parameters for a given request are typically passed unchanged throughout the template stack. The template stack 321 receives the request and retrieves the specified templates 320, which in turn, calls and performs one or more specified transform(s) 315 to data retrieved (via drivers 310) from specified template data sources. The result of applying the transform to the retrieved data is then returned to the calling application via a response 322. For example, a request can call a template that creates a grid of interface performance data that can specify the Merge transform and retrieve data from the NpaFre and Kite drivers.

Notably, as discussed above, in addition to directly retrieving data from drivers 310, templates 320 can also call other templates so as to permit stackable templates. Further, requests 322 are typically defined in terms of a corresponding template's schema. That is, a particular request refers to tags and metrics that are available in the schema of the corresponding template. Similarly, data returned in a response is also defined in terms of the corresponding template's schema. In this fashion, templates are similar to executing queries (e.g., requests) against a virtual tables having particular schema (e.g., a template's schema).

Accordingly, the techniques discussed herein allow for data from various data sources to be correlated via the common framework of the template stack 321. As another illustrative example of correlating incoming data from diverse data sources for a particular application, consider Internet Protocol (IP) transactions for a networked Oracle application. The Oracle application is typically associated with two types of sources of data - one data source (e.g. from a client device) provides, for example, data about response times of the Oracle application while another data source (e.g., from a server hosting the Oracle application) provides performance data of the host server (e.g., buffer cache, query analyzer, page faults, I/O performance, etc.). The template stack 321, via drivers 310 can import data from both sources into a common framework and associate such common data with the networked Oracle application. In this fashion, correlations and analysis can be performed to identify underlying causes of user performance problems for the Oracle application. (e.g., a lack of memory assigned to a buffer cache on the Oracle server, etc.).

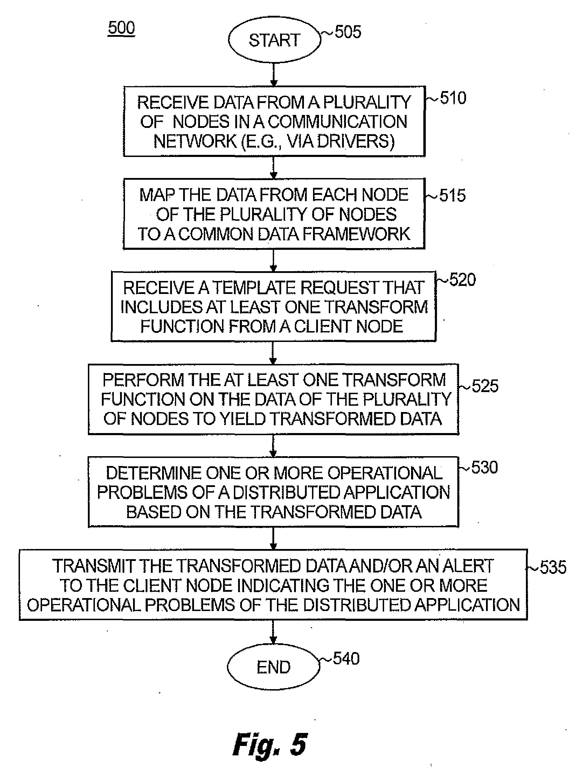

FIG. 5 illustrates an example simplified procedure 500 for integrating data from various network nodes into a common framework, particularly from the perspective of a template stack node, in accordance with one or more embodiments described herein. The procedure 500 starts at step 505, and continues to step 510, where, as described in greater detail above, a template stack node receives data from a plurality of data sources (i.e., nodes) in a communication network. For example, as discussed above, the template stack node includes various drivers that are compatible with various data sources from each of the plurality of nodes. Once the data is received, the template stack node, in step 515, maps the data to a common data framework. Next, in step 520, the template stack node receives a template request from a client node. The template request includes at least one transform function. Additionally, in certain embodiments discussed above, the template request can specify or call additional templates (including respective additional transform functions). In this fashion, as discussed above, the templates are stackable. In response to the template request, in step 525, the template stack node performs the transform function(s) on the data of the plurality of nodes to yield transformed data. Next, in step 530, the template stack node determines one or more operational problems of a distributed application based on the transformed data and in step 535, the template stack node transmits the transformed data and/or an alert to the client node. Notably, the template stack node can use an alert engine as is appreciated by those skilled in the art to analyze the transformed data and geneate an alert when anomalies are detected in the transformed data. Such alert indicates, for example, the one or more operational problems of the distributed application. The procedure may end in step 540, or, alternatively, the template stack node node can receive additional template requests, as described in step 520.

It should be noted that while certain steps within procedure 500 may be optional as described above, the steps shown in FIG. 5 are merely examples for illustration, and certain other steps may be included or excluded as desired. Further, while a particular order of the steps is shown, this ordering is merely illustrative, and any suitable arrangement of the steps may be utilized without departing from the scope of the embodiments herein.

The techniques described herein, therefore, provide a common framework, via a template stack, that integrates a variety of local data from network nodes. In particular, the techniques herein provide for data analysis and correlation across a diverse collection of data sources for networked applications. In particular, by using the common framework, the template stack is able to directly compare, analyze and correlate data across the variety of local data sources.

While there have been shown and described illustrative embodiments that provide a common framework of the template stack, it is to be understood that various other adaptations and modifications may be made within the spirit and scope of the embodiments herein. For example, the embodiments have been shown and described herein with particular templates, transforms and drivers. However, the embodiments in their broader sense are not as limited, and may, in fact, be used with any types of template, transform, and driver.

The foregoing description has been directed to specific embodiments. It will be apparent, however, that other variations and modifications may be made to the described embodiments, with the attainment of some or all of their advantages. For instance, it is expressly contemplated that the components and/or elements described herein can be implemented as software being stored on a tangible (non-transitory) computer-readable medium (e.g., disks/CDs/etc.) having program instructions executing on a computer, hardware, firmware, or a combination thereof. Accordingly this description is to be taken only by way of example and not to otherwise limit the scope of the embodiments herein. Therefore, it is the object of the appended claims to cover all such variations and modifications as come within the true spirit and scope of the embodiments herein.

## Claims

1. A method, comprising:
receiving, via a template stack node, data from a plurality of nodes in a communication network;
mapping the data from each node of the plurality of nodes to a common data framework;
receiving a template request from a client node, the template request including at least one transform function;
performing, in response to the template request, the at least one transform function on the data of the plurality of nodes to yield transformed data; and
transmitting the transformed data to the client node.

2. The method of claim 1, further comprising:
determining one or more operational problems of a distributed application based on the transformed data; and
transmitting an alert to the client node indicating the one or more operational problems of the distributed application.

3. The method of claim 1, wherein at least one of a) or b):-
a) the at least one transform function is one selected from the group consisting of a merge, a union, an addprovisionedinterfaces, and a derived columns;
b) performing the at least one transform function on the data comprises catching and handling exceptions and errors.

4. The method of claim 1, wherein the template request further includes a call to at least one additional transform function, wherein performing the at least one transform function comprises retrieving the at least one additional transform function and performing the at least one additional transform function on the transformed data to yield supplemental transformed data, wherein transmitting the transformed data to the client node comprises transmitting the supplemental transformed data to the client node.

5. The method of claim 1, wherein at least one of a) or b):-
a) the template request is an executable file;
b) receiving the data from a plurality of nodes in a communication network comprises receiving the data from the plurality of nodes via a driver.

6. An apparatus, comprising:
one or more network interfaces of a template stack node adapted to communicate in a communication network;
a processor adapted to execute one or more processes; and
a memory configured to store a process executable by the processor, the process when executed operable to:
receive data from a plurality of nodes in a communication network;
map the data from each node of the plurality of nodes to a common data framework;
receive a template request from a client node, the template request including at least one transform function;
perform, in response to the template request, the at least one transform function on the data of the plurality of nodes to yield transformed data; and
transmit the transformed data to the client node.

7. The apparatus of claim 6, wherein the process, when executed, is further operable to:
determine one or more operational problems of a distributed application based on the transformed data; and
transmitting an alert to the client node indicating the one or more operational problems of the distributed application, wherein
optionally:-
the at least one transform function is one selected from the group consisting of a merge, a union, an addprovisionedinterfaces, and a derived columns.

8. The apparatus of claim 6, wherein the process to perform the at least one transform function on the data is further operable to catch and handle exceptions and errors.

9. The apparatus of claim 6, wherein the template request further includes a call to at least one additional transform function, wherein the process to perform the at least one transform function is further operable to retrieve the at least one additional transform function and perform the at least one additional transform function on the transformed data to yield supplemental transformed data, wherein the process to transmit the transformed data to the client node is further operable to transmit the supplemental transformed data to the client node.

10. The apparatus of claim 6, wherein at least one of a) or b):-
a) the template request is an executable file;
b) the process to receive the data from a plurality of nodes in a communication network is further operable to receive the data from the plurality of nodes via a driver.

11. A tangible, non-transitory, computer-readable media having software encoded thereon, the software, when executed by a processor, operable to:
receive data from a plurality of nodes in a communication network;
map the data from each node of the plurality of nodes to a common data framework;
receive an template request from a client node, the template request including at least one transform function;
perform, in response to the template request, the at least one transform function on the data of the plurality of nodes to yield transformed data; and
transmit the transformed data to the client node.

12. The tangible, non-transitory, computer-readable media of claim 11, wherein the process, when executed by the processor, is further operable to:
determine one or more operational problems of a distributed application based on the transformed data; and
transmitting an alert to the client node indicating the one or more operational problems of the distributed application.

13. The tangible, non-transitory, computer-readable media of claim 11, wherein the process to perform the at least one transform function on the data, when executed by the processor, is further operable to catch and handle exceptions and errors.

14. The tangible, non-transitory, computer-readable media of claim 11, wherein the template request further includes a call to at least one additional transform function, wherein the process to perform the at least one transform function, when executed by the processor, is further operable to retrieve the at least one additional transform function and perform the at least one additional transform function on the transformed data to yield supplemental transformed data, wherein the process to transmit the transformed data to the client node, when executed by the processor, is further operable to transmit the supplemental transformed data to the client node.

15. The tangible, non-transitory, computer-readable media of claim 11, wherein at least one of a) or b):-
a) the template request is an executable file;
b) the process to receive the data from a plurality of nodes in a communication network, when executed by the processor, is further operable to receive the data from the plurality of nodes via a driver.
